# FASCICULE DE BREVET EUROPEEN

(11) **EP 1 021 483 B1**
(45) Date de publication et mention de la délivrance du brevet: **07.04.2004**
(21) Numéro de dépôt: 99929470.5
(22) Date de dépôt: 09.07.1999
(51) Int. Cl.: C08K 5/42, C08L 57/00, C08J 3/00

(54) **POUDRES REDISPERSABLES DANS L'EAU DE POLYMERES FILMOGENES PREPARES A PARTIR DE MONOMERES A INSATURATION ETHYLENIQUE ET CONTENANT DES NAPHTALENESULFONATES**
IN WASSER REDISPERGIERBARE PULVER FILMBILDENDER POLYMERE, HERGESTELLT AUS ETHYLENISCH-UNGESÄTTIGTEN MONOMEREN, ENTHALTEND NAPHTHALINSULFONATE
WATER-REDISPERSIBLE FILM-FORMING POLYMER POWDERS PREPARED FROM ETHYLENICALLY UNSATURATED MONOMERS AND CONTAINING NAPHTHALENESULPHONATES

(30) Priorité: 30.07.1998 FR 9809779
(43) Date de publication de la demande: 26.07.2000
(73) Titulaire: RHODIA CHIMIE, 92408 Courbevoie Cédex (FR)
(72) Inventeur: BETT, William, F-75012 Paris (FR); COLOMBET, Jean-François, F-92500 Rueil Malmaison (FR)
(74) Mandataire: Fevrier, Murielle
(86) Numéro de dépôt international: PCT/FR1999/001692
(87) Numéro de publication internationale: WO 2000/006641

(56) Documents cités:
- EP-A- 0 610 699
- WO-A-97/25371
- DE-A- 4 027 667
- FR-A- 2 066 499
- FR-A- 2 075 550
- FR-A- 2 115 751
- PATENT ABSTRACTS OF JAPAN vol. 095, no. 011, 26 décembre 1995 (1995-12-26) & JP 07 207179 A (SANYO SHIKISO KK), 8 août 1995 (1995-08-08)

## Description

La présente invention concerne des poudres redispersables dans l'eau de polymères filmogènes préparés à partir de monomères à insaturation éthylénique.

Les polymères filmogènes préparés à partir de monomères à insaturation éthylénique sont utilisés fréquemment comme adjuvants dans les compositions de liants minéraux hydrauliques pour en améliorer la mise en oeuvre et les propriétés après durcissement telles que l'adhésion sur divers substrats, l'étanchéité, la souplesse, les propriétés mécaniques. Ils se présentent généralement sous forme de dispersions aqueuses (latex).

Ils peuvent également se présenter sous forme de poudres, lesdites poudres pouvant être redispersées dans l'eau. Les poudres redispersables de polymères présentent l'avantage par rapport aux dispersions aqueuses de pouvoir être prémètangées avec le ciment sous forme de compositions pulvérulentes prêtes à l'emploi utilisables, par exemple, pour la fabrication de mortiers et bétons destinés à être appliqués sur des matériaux de construction, pour la fabrication de mortiers-colles ou pour la réalisation d'enduits de protection et de décoration à l'intérieur ou à l'extérieur des bâtiments.

Ces poudres redispersables sont obtenues par pulvérisation et séchage de dispersions de polymères filmogènes, généralement des polymères acryliques. Pour obtenir des poudres de polymères facilement redispersables, il a été proposé d'ajouter aux dispersions, avant pulvérisation, des produits de condensation mélamine-formaldéhyde-sulfonate (US-A-3784648) ou naphtatène-formaldéhyde-sulfonate (DE-A-3143070) et/ou des copolymères vinylpyrrolidone-acétate de vinyle (EP-78449).

Ces additifs ont l'inconvénient de présenter une synthèse compliquée du fait de la synthèse d'un premier produit puis de sa condensation avec un autre.

Le but de la présente invention est de proposer une nouvelle composition pulvérulente redispersable totalement ou presque totalement dans l'eau, qui soit à base d'un polymère filmogène préparé à partir de monomères à insaturation éthylénique.

Un autre but de la présente invention est de proposer un procédé de préparation des poudres de type ci-dessus à partir de latex de polymères filmogènes.

Un autre but de la présente invention est de proposer une poudre redispersable du type ci-dessus qui, sous forme de poudre ou après éventuelle redispersion dans l'eau sous forme de latex reconstitué, soit utilisable dans tous les domaines d'application des latex pour réaliser des revêtements (notamment peintures, composition de couchage du papier) ou des compositions adhésives (notamment adhésifs sensibles à la pression, colles carrelage).

Un autre but de la présente invention est de proposer une poudre redispersable du type ci-dessus (ou le latex reconstitué en découlant) plus particulièrement en vue de son utilisation comme additifs dans des formulations avec liant hydraulique (ciment, plâtre), du type coulis, mortier ou béton afin d'en améliorer les propriétés : adhésion sur divers supports, résistances au choc et à l'abrasion, résistances en flexion et compression, souplesse.

Ces buts et d'autres sont atteints par la présente invention qui concerne une composition pulvérulente redispersable dans l'eau et comportant :
- au moins un polymére filmogéne insoluble dans l'eau, ledit polymére (a) étant préparé à partir d'au moins un monomère à insaturation éthylénique, et
- au moins un naphtalénesulfonate (b) de formule générale (I) : 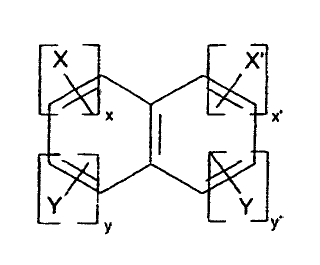
dans laquelle :
. X et X', identiques ou différents, représentent OH ou NH₂,
. Y représente SO₃⁻,M⁺, avec M métal alcalin,
. x ≥ 0, x' ≥ 0 et x + x' ≥ 1.
. y ≥ 0, y' ≥ 0 et y + y' ≥ 1.

L'invention concerne également un procédé de préparation d'une telle composition pulvérulente redispersable, dans lequel on élimine l'eau d'une dispersion aqueuse du polymère filmogène insoluble dans l'eau (a) préparée par polymérisation en émulsion et contenant des quantités adaptées en naphtalènesulfonate (b) et éventuellement : en polyphénol (c), en agent tensio-actif éthoxylé (d) et en charge minérale (e).

L'invention concerne donc tout d'abord une composition pulvérulente redispersable dans l'eau et comportant :
- au moins un polymère filmogène insoluble dans l'eau, ledit polymère (a) étant préparé à partir d'au moins un monomère à insaturation éthylénique, et
- au moins un naphtalènesulfonate (b) de formule générale (I) : 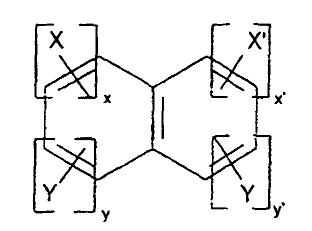
dans laquelle :
. X et X', identiques ou différents, représentent OH ou NH₂,
. Y représente SO₃⁻,M⁺, avec M métal alcalin,
. x ≥ 0, x' ≥ 0 et x + x' ≥ 1.
. y ≥ 0, y' ≥ 0 et y + y' ≥ 1.

Dans la composition selon l'invention, le polymère filmogène insoluble dans l'eau (a) est préparé à partir de monomères à insaturation éthylénique.

La température de transition vitreuse (Tg) du polymère filmogène (a) peut être comprise entre environ -20°C et +50°C, de préférence entre -10°C et +40°C. Ce polymère peut être préparé de manière connue en soi par polymérisation en émulsion de monomères à insaturation éthylénique à l'aide d'amorceurs de polymérisation et en présence d'agents émulsifiants et/ou dispersants usuels. Généralement, la teneur en polymère dans l'émulsion se situe entre 30 et 70 % en poids, plus spécifiquement entre 35 et 65 % en poids.

A titre de monomères utiles pour la synthèse du polymère filmogène (a), on peut citer :
- les esters vinyliques et plus particulièrement l'acétate de vinyle,
- les esters acryliques tels que les acrylates et méthacrylates d'alkyle dont le groupe alkyle contient de 1 à 10 atomes de carbone, par exemple, les acrylates et méthacrylates de méthyle, éthyle, n-butyle, 2-éthylhexyle,
- les monomères vinylaromatiques en particulier le styrène.

Ces monomères peuvent être copolymérisés entre eux ou avec d'autres monomères à insaturation éthylénique.

A titre d'exemples non limitatifs de monomères copolymérisables avec les esters vinyliques et/ou les esters acryliques et/ou les monomères vinylaromatiques, on peut citer l'éthylène et les oléfines comme l'isobutène : les esters vinyliques d'acides monocarboxyliques saturés, ramifiés ou non, ayant de 1 à 12 atomes de carbone. comme le propionate, le "Versatate" (marque déposée pour les esters d'acides ramifiés en C₉-C₁₁). le pivalate, le laurate de vinyle ; les esters d'acides insaturés mono- ou dicarboxyliques possédant 3 à 6 atomes de carbone avec les alcanots possédant 1 à 10 atomes de carbone, comme les maléates, fumarates de méthyle, d'éthyle, de butyle, d'éthylhexyle ; les monomères vinylaromatiques tels que les méthylstyrènes, les vinyltoluènes ; les halogénures de vinyle tels que le chlorure de vinyle, le chlorure de vinylidène, les diolefines particulièrement le butadiène.

On peut également ajouter aux monomères définis ci-dessus au moins un autre monomère choisi dans la liste suivante : acrylamide, 2-acrylamido-2-méthyl-propane sulfonate de sodium (AMPS), méthallylsulfonate de sodium. Ces monomères sont ajoutés en quantité d'au plus 2 % en poids par rapport au poids total des monomères. Ces monomères sont ajoutés au cours de la polymérisation ; ils assurent la stabilité colloïdale du latex.

De préférence, le polymère filmogène insoluble dans l'eau est choisi parmi :
- les homopolymères vinyliques ou acrylates,
- les copolymères d'acétate de vinyle, de styrène/butadiène, de styrène/acrylate ou de styrène/butadiène/acrylate.

Généralement, la polymérisation des monomères est mise en oeuvre en émulsion en présence d'un émulsifiant et d'un initiateur de polymérisation.

Les monomères mis en oeuvre peuvent être introduits en mélange ou séparément et simultanément dans le milieu réactionnel, soit avant le début de la polymérisation en une seule fois, soit au cours de la polymérisation par fractions successives ou en continu.

En tant qu'agent émulsifiant, on met en oeuvre généralement les agents anioniques classiques représentés notamment par les sels d'acides gras, les alkylsulfates, les alkylsulfonates, les alkylarylsulfates, les alkylarylsulfonates, les arylsulfates, les arylsulfonates, les sulfosuccinates, les alkylphosphates de métaux alcalins, les sels de l'acide abiétique hydrogénés ou non. Ils sont généralement employés à raison de 0,01 à 5 % en poids par rapport au poids total des monomères.

L'initiateur de polymérisation en émulsion est représenté plus particulièrement par les hydroperoxydes tels que l'eau oxygénée, l'hydroperoxyde de cumène, l'hydroperoxyde de diisopropylbenzène, l'hydropéroxyde de paramenthane, l'hydroperoxyde de tert-butyl, et par les persulfates tels que le persulfate de sodium, le persulfate de potassium, le persulfate d'ammonium. Il est employé en quantité comprise entre 0.05 et 2 % en poids par rapport au total des monomères. Ces initiateurs sont éventuellement associés à un réducteur, tel que le bisulfite ou le formaldéhydesulfoxylate de sodium, les polyéthylèneamines, les sucres (dextrose, saccharose), les sels métalliques. La quantité de réducteur utilisé varie de 0 à 3 % en poids par rapport au poids total des monomères.

La température de réaction, fonction de l'initiateur mis en oeuvre, est généralement comprise entre 0 et 100°C, et de préférence, entre 30 et 90°C.

On peut utiliser un agent de transfert dans des proportions allant de 0 à 3 % en poids par rapport au(x) monomère(s), généralement choisi parmi les mercaptans tels que le N-dodécylmercaptan ou le tertiododécylmercaptan, le cyclohexène, les hydrocarbures halogénés tels que le chloroforme, le bromoforme, le tétrachlorure de carbone. Il permet de régler la longueur des chaînes moléculaires. Il est ajouté au milieu réactionnel soit avant la polymérisation, soit en cours de polymérisation.

Les compositions pulvérulentes selon l'invention comprennent en outre au moins un naphtalènesulfonate (b) de formule générale (I). Plus précisément ce composé (b) est un naphtalène sulfonate d'un métal alcalin substitué par au moins un groupe amino et/ou hydroxy.

En accord avec la formule générale (I), ce naphtalènesutfonate (b) comprend au moins une fonction sulfonate. Si plusieurs fonctions sulfonates sont présentes, elles peuvent être sur t'un et/ou l'autre cycle benzénique.

En outre, ce naphtalènesutfonate (b) de formule générale (I) est fonctionnalisé par au moins une fonction hydroxy et/ou amino, ces fonctions étant présentes sur l'un et/ou l'autre cycle benzénique.

Le métal alcalin est généralement le sodium.

Les naphtalènesulfonates (b) monosulfonatés et fonctionnalisés en 1,4 sont préférés. Ainsi, les naphtalènesulfonates (b) de formule générale (I) préférés sont le 4-amino-1-naphtalènesulfonate de sodium et le 1-naphtol-4-sulfonate de sodium.

La teneur en poids du naphtalènesulfonate (b) de formule (I) par rapport au polymère (a) est comprise en général entre 2 et 40 %, de préférence entre 8 et 22 %.

Selon un mode particulier de l'invention, la composition pulvérulente peut comprendre un polyphénol (c) de synthèse ou naturel. Par polyphénol, on entend les produits issus de la condensation des phénols sulfonatés avec du formaldéhyde.

Ces polyphénols sont généralement synthétisés à partir de phénols, éventuellement substitués. Lesdits phénols sont sulfonatés par mise en contact avec de l'acide sulfurique, puis condensés avec du formaldéhyde, ou bien inversement condensés avec du formaldéhyde, puis sulfonatés. La sulfonation peut être une sulfoalkylation : elle permet d'introduire des groupes SO₃H ou alkyl-SO₃H sur le cycle benzénique. Suite à la condensation ou la sulfonation, les polyphénols obtenus peuvent subir d'autres réactions, on peut effectuer par exemple une neutralisation à l'aide d'un sel alcalin ou d'une amine.

On peut utiliser un phénol non substitué ou des phénols substitués, par exemple : les halogénophénols tels que les chlorophénols, les alkylphénols tels que les crésols ou les xylénols, le résorcinol, le pyrogallol, les naphtols, ou encore les bisphénols tels que les dihydroxydiphénylpropane ou les dihydroxydiphénylsulfones. De préférence, il s'agit de dihydroxydiphénylsulfones.

Pour la sulfonation, on utilise généralement de l'acide sulfurique concentré, et pour la condensation du formaldéhyde en solution.

Selon une première variante préférée, le polyphénol (c) est issu :
- de la condensation de formaldéhyde et d'un composé de formule générale (II) : 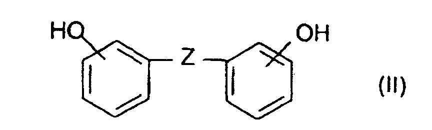 dans laquelle Z représente SO₂, O, CH₂, CO, S, NR, avec R représentant H ou un groupe alkyle,
- et de la sulfométhylation du condensat obtenu.

L'étape de sulfométhylation introduit des groupes CH₂SO₃⁻M⁺ sur au moins un cycle benzénique du condensat, M représentant un métal alcalin, généralement le sodium. De préférence, Z représente SO₂.

Ce polyphénol peut être obtenu par la mise en oeuvre des étapes suivantes :
- synthèse d'une sulfone par réaction d'un excès de phénol par rapport à l'acide sulfurique (au moins 2 moles de phénol par mole d'acide sulfurique) à haute température, de préférence supérieure à 150°C,
- neutralisation de la sulfone obtenue avec de la soude,
- condensation du produit neutralisé avec du formol,
- sulfométhylation du condensat.

Selon une deuxième variante préférée de l'invention, le polyphénol (c) est issu de la condensation de phénols sulfonatés avec du formaldéhyde et des bases organiques azotées. Ce polyphénol peut être en particulier obtenu par :
- production d'acide phénolsulfonique par sulfonation de phénol,
- condensation de l'acide sulfonique obtenu avec du formaldéhyde et de l'urée,
- neutralisation du condensat avec de la soude.

Il peut ensuite être réacidifié puis décoloré avec du bisulfite de soude.

On peut également utiliser les polyphénols décrits dans l'article "Synthetic Tannins" paru dans Leather Science, 1971, Vol. 18, p.8-16.

La teneur en poids du polyphénol, (c) par rapport au polymère (a) est comprise en général entre 3 et 22 %.

Selon un mode préférentiel de l'invention, les compositions pulvérulentes peuvent comprendre également au moins un tensio-actif polyoxyalkyléné (d).

Il peut être choisi parmi les dérivés polyoxyalkylénés non ioniques suivants :
- les alcools gras éthoxylés ou éthoxy-propoxylés,
- les triglycérides éthoxylés ou éthoxy-propoxylés,
- les acides gras éthoxylés ou éthoxy-propoxylés,
- les esters de sorbitan éthoxylés ou éthoxy-propoxylés,
- les amines grasses éthoxylées ou éthoxy-propoxylées,
- les di(phényl-1 éthyl) phénols éthoxylés ou éthoxy-propoxylés,
- les tri(phényl-1 éthyl) phénols éthoxylés ou éthoxy-propoxylés,
- les alkyls phénols éthoxylés ou éthoxy-propoxylés,
- les tristyryls phénols éthoxylés ou les distyryls phénols éthoxylés,
- les diblocs oxyéthylène (OE)/oxypropylène (OP),
- les triblocs OE/OP/OE.

Le nombre de motifs oxyéthylène (OE) et/ou oxypropylène (OP) de ces tensio-actifs non ioniques varie habituellement de 2 à 100. Plus particulièrement, le nombre de motifs OE et/ou OP se situe entre 2 et 50. De préférence, le nombre de motifs OE et/ou OP est compris entre 10 et 50.

Les alcools gras éthoxylés ou éthoxy-propoxylés comprennent généralement de 6 à 22 atomes de carbone, les motifs OE et OP étant exclus de ces nombres. De préférence, ces motifs sont des motifs éthoxylés.

Les triglycérides éthoxylés ou éthoxy-propoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de poisson, l'huile de palme, l'huile de pépin de raisin, l'huile de soja, l'huile de ricin, l'huile de colza, l'huile de coprah, l'huile de noix de coco) et sont de préférence éthoxylés.

Les acides gras éthoxylés ou éthoxy-propoxylés sont des esters d'acide gras (tels que par exemple l'acide oléïque, l'acide stéarique), et sont, de préférence, éthoxylés.

Les esters de sorbitan éthoxytés ou éthoxy-propoxylés sont des esters du sorbitol cyclisés d'acide gras comprenant de 10 à 20 atomes de carbone comme l'acide laurique, l'acide stéarique ou l'acide oléïque, et sont de préférence éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylèneglycol.

De même, le terme acide gras éthoxylé inclut aussi bien les produits obtenus pas éthoxylation d'un acide gras par l'oxyde d'éthylène que ceux obtenus par transestérification d'un acide gras par un polyéthyléneglycol.

Les amines grasses éthoxylées ou éthoxy-propoxylées ont généralement de 10 à 22 atomes de carbone, les motifs OE et OP étant exclus de ces nombres, et sont de préférence éthoxylées.

Les alkylphénols éthoxylés ou éthoxy-propoxylés ont généralement un ou deux groupes alkyles, linéaires ou ramifiés, ayant 4 à 12 atomes de carbone. A titre d'exemple on peut citer notamment les groupes octyle, nonyle ou dodécyle.

A titre d'exemples de tensio-actifs non ioniques du groupe des alkylphénols éthoxylés ou éthoxy-propoxylés, des di(phényl-1 éthyl) phénols éthoxylés et des tri(phényl-1 éthyl) phénols éthoxy ou éthoxy-propoxylés, on peut citer notamment le di(phényl-1 éthyl)phénol éthoxylé avec 5 motifs OE, le di(phényl-1 éthyl)phénol éthoxylé avec 10 motifs OE, le tri(phényl-1 éthyl)phénol éthoxylé avec 16 motifs OE, le tri(phényl-1 éthyl)phénol éthoxylé avec 20 motifs OE, le tri(phényl-1 éthyl)phénol éthoxylé avec 25 motifs OE, le tri(phényl-1 éthyl)phénol éthoxylé avec 40 motifs OE, les tri(phényl-1 éthyl)phénols éthoxy-propoxylés avec 25 motifs OE + OP, le nonylphénol éthoxylé avec 2 motifs OE, le nonylphénol éthoxylé avec 4 motifs OE, le nonylphénol éthoxylé avec 6 motifs OE, le nonylphénol éthoxylé avec 9 motifs OE, les nonylphénols éthoxy-propoxylés avec 25 motifs OE + OP, les nonylphénols éthoxy-propoxylés avec 30 motifs OE + OP, les nonylphénols éthoxy-propoxylés avec 40 motifs OE + OP, les nonylphénols éthoxy-propoxylés avec 55 motifs OE + OP, les nonylphénols éthoxy-propoxylés avec 80 motifs OE + OP.

On peut également utiliser un agent tensio-actif ionique et choisi parmi les dérivés polyoxyalkylénés tels que définis ci-dessus, par exemple sous forme de sulfonates, de sulfates, de phosphates ou de phosphonates, le contre-ion pouvant être choisi parmi K⁺, Na⁺ ou NH₄⁺.

La teneur en poids de l'agent tensio-actif polyoxyalkyléné (d), exprimé en sec, par rapport au polymère (a) est comprise en général entre 1 et 10 %, de préférence entre 3 et 6 %.

La composition selon l'invention peut comprendre en outre au moins une charge minérale (e) en poudre de granulométrie inférieure à 20 µm.

Comme charge minérale, on recommande d'utiliser une charge choisie parmi le carbonate de calcium, le kaolin, le sulfate de baryum, l'oxyde de titane, le talc, l'alumine hydratée, la bentonite et le sullfoaluminate de calcium (blanc satin) ou la silice.

La présence de ces charges minérales favorise la préparation de la poudre et sa stabilité au stockage en évitant l'agrégation de la poudre, c'est-à-dire son mottage.

La quantité de charge minérale (e) peut être comprise entre 0,5 et 20 % en poids, de préférence entre 5 et 15 %, par rapport au polymère filmogène insoluble dans l'eau (a).

La granulométrie de la composition pulvérulente selon l'invention est généralement inférieure à 500 µm.

Les compositions pulvérulentes selon l'invention peuvent être aisément redispersées dans l'eau sous forme de latex reconstitué.

Elles peuvent donc être utilisées directement sous forme de poudre ou être préalablement mélangées à de l'eau pour former des latex reconstitués. Ces poudres sont stables au stockage : elles restent redispersables après plusieurs jours de stockage à 55°C.

L'invention concerne également le procédé de préparation de la composition pulvérulente ci-dessus, dans lequel on élimine l'eau d'une dispersion aqueuse du polymère filmogène insoluble dans l'eau (a) préparée par polymérisation en émulsion et contenant des quantités adaptées en naphtalènesulfonate (b), et éventuellement : en polyphénol (c), en agent tensio-actif éthoxylé (d) ou en charge minérale (e).

On part donc d'une dispersion aqueuse du polymère filmogène insoluble dans l'eau (a). Cette dispersion est obtenue par polymérisation en émulsion. Ce type de dispersion est communément appelée latex. En général, le naphtalènesulfonate (b), et éventuellement le polyphénol (c), l'agent tensio-actif polyoxyalkyléné (d) et la charge minérale (e), sont ajoutés à la dispersion aqueuse du polymère filmogène insoluble dans l'eau (a). Pour l'utilisation de certains naphtalènesulfonates (b), tels que le 1-naphtol-4-sulfonate de sodium, on ajuste le pH de la dispersion aqueuse de polymère à un pH supérieur à 7, et de préférence supérieur à 8,5, avant de la mélanger avec le naphtalènesulfonate (b) et éventuellement : le polyphénol (c) et l'agent tensio-actif (d). Cette neutralisation peut se faire par ajout de chaux, soude ou ammoniaque. De préférence, il s'agit de la chaux.

Selon une variante de l'invention, l'agent tensio-actif polyoxyalkyléné (d) est ajouté au cours de la polymérisation en émulsion du polymère (a), donc avant que la dispersion aqueuse ne soit formée.

Les compositions pulvérulentes selon l'invention peuvent comporter en outre les additifs usuels dans l'application visée, en particulier des biocides, des microbiostats, des bactériostatiques, des anti-UV, des antioxydants ou des antimousses silicones et organiques. Dans le cas où de tels additifs sont utilisés, ils sont ajoutés à la dispersion après la polymérisation.

Les teneurs respectives des divers constituants sont choisies de telle sorte que les compositions pulvérulentes séchées présentent les teneurs définies auparavant. De préférence, on part d'une émulsion présentant un extrait sec (polymère filmogène (a) + naphtalènesulfonate (b) + polyphénol (c) + agent tensio-actif éthoxylé (d)) compris entre 10 et 70 % en poids, encore plus préférentiellement entre 40 et 60 %.

L'eau de cette dispersion est ensuite éliminée afin d'obtenir une poudre. On peut utiliser un procédé de congélation, suivie d'une étape de sublimation, ou un procédé de lyophilisation ou un procédé de séchage, par exemple de séchage par atomisation (pulvérisation - séchage). Ces procédés peuvent être suivis d'un broyage à la granulométrie désirée.

Le séchage par atomisation est le procédé préféré car il permet d'obtenir directement la poudre à la granulométrie désirée sans passer nécessairement par l'étape de broyage. Le séchage par atomisation peut s'effectuer de manière habituelle dans tout appareil connu tel que, par exemple, une tour d'atomisation associant une pulvérisation par buse ou turbine avec un courant de gaz chaud. La température d'entrée du gaz chaud (en général de l'air), en tête de colonne, est, de préférence, comprise entre 100 et 150°C et la température de sortie est, de préférence, comprise entre 55 et 90°C.

La charge minérale (e) peut être ajoutée à la dispersion aqueuse de polymère (a) de départ. De préférence, tout ou partie de la charge minérale est introduite lors de l'étape de pulvérisation dans le procédé de séchage par atomisation. Il est possible également d'ajouter la charge minérale à la composition pulvérulente finale.

Selon une variante du procédé, la poudre obtenue peut être granulée : dans ce cas, il est possible d'utiliser un lit fluide en post-atomisation.

Dans la plupart des cas, les compositions pulvérulentes selon l'invention sont totalement redispersables dans l'eau à température ambiante par simple agitation. Par totalement redispersable, on entend une composition pulvérulente conforme à l'invention qui, après addition d'une quantité adaptée d'eau, permet d'obtenir un latex reconstitué dont la granulométrie des particules est sensiblement identique à la granulométrie des particules de latex présentes dans l'émulsion de départ avant séchage.

L'invention concerne également le latex reconstitué obtenu par redispersion dans l'eau d'une composition pulvérulente telle que définie précédemment.

Enfin, l'invention concerne l'utilisation des compositions pulvérulentes décrites ci-dessus comme additifs à des liants hydrauliques dans l'industrie du bâtiment, du génie civil ou du pétrole. Les liants hydrauliques peuvent être sous forme de coulis, mortiers ou bétons. Le liant hydraulique est généralement le ciment. Les applications concernées sont, par exemple, les ciment-colles carrelage, les enduits de lissage et de ragréage, les colles et enduits pour complexes isolants, les mortiers de réparation, les revêtements d'étanchéité et les coulis de cimentation des puits de pétrole.

Les compositions pulvérulentes de l'invention ou les latex reconstitués en dérivant sont utilisables en outre dans tous les autres domaines d'application des latex, plus particulièrement dans le domaine des adhésifs, des compositions de couchage du papier et des peintures.

Les exemples suivants illustrent l'invention sans toutefois en limiter la portée.

### EXEMPLES

### Exemple 1

On part d'un latex issu de la polymérisation en émulsion de méthacrylate de méthyle et d'acrylate de butyle, la polymérisation n'ayant pas lieu en présence d'un tensio-actif polypoxyalkyléné. Ce latex présente les caractéristiques suivantes :
- taille moyenne des particules: 250 nm,
- extrait sec : 50 % en poids,
- viscosité : 100 mPa.s,
- pH = 7.

On introduit dans le latex 15 % en poids de 4-amino-1-naphtalène sulfonate de sodium par rapport au polymère du latex.

La dispersion obtenue est transformée en poudre par séchage/pulvérisation. Ce séchage est réalisé dans une tour d'atomisation dans laquelle la température d'entrée de l'air chaud est de 105 °C et la température de sortie de 60°C.

Durant l'atomisation, on introduit dans la tour des particules de kaolin de taille comprise entre 2 et 3 µm en quantité telle que la composition pulvérulente, à la sortie de l'atomiseur, présente une teneur en kaolin de 12 % en poids.

### Test de redispersibilité

La composition pulvérulente obtenue est dispersée dans l'eau de manière à obtenir un latex reconstitué d'extrait sec de 30 % en poids. Le mélange se fait à l'aide d'un agitateur magnétique pendant 15 min.

On contrôle la distribution granulométrique des particules en suspension dans le latex reconstitué à l'aide d'un granulométre Coulter LS230. La taille moyenne du latex reconstitué est de 250 nm.

La redispersabilité est bonne.

### Exemple 2

### Préparation du latex

Un latex à base de méthacrylate de méthyle et d'acrylate de butyle est synthétisé par polymérisation en émulsion en présence d'un alcool gras éthoxylé avec 25 motifs éthoxylés (tensio-actif d1).

Les caractéristiques du latex obtenu sont les suivantes :
- taille moyenne des particules : 150 nm,
- extrait sec : 41,2 % en poids,
- viscosité : 20 mPa.s,
- pH = 2.4,
- teneur en d1 par rapport au polymère du latex : 3,9 % en poids.

### Préparation de la composition pulvérulente

Le pH du latex est ensuite ajusté à environ 7 par ajout d'une solution aqueuse de soude. Puis, on introduit dans le latex 15 % en poids de 4-amino-1-naphtalène sulfonate de sodium par rapport au polymère du latex.

La dispersion obtenue est transformée en poudre selon le procédé de pulvérisation de l'exemple 1.

La poudre présente une granulométrie moyenne de 80 µm.

### Test de redispersibilité

La composition pulvérulente obtenue est dispersée dans l'eau selon le protocole de l'exemple 1.

On contrôle la distribution granulométrique des particules en suspension dans le latex reconstitué à l'aide d'un granulométre Coulter LS230. La taille moyenne du latex reconstitué est de 150 nm. La redispersabilité est bonne.

### Exemples 3 à 11

L'exemple 2 est répété en mettant en oeuvre des variantes :
- sur la nature du latex,
- sur la nature de l'agent tensio-actif éthoxylé (d),
- sur le moment d'introduction de cet agent,
- avec ou sans 4-amino-1-naphtalène sulfonate de sodium,

La taille des particules des différents latex de départ est comprise entre 120 et 150 nm.

Les conditions et résultats sont rassemblés dans le tableau 1.

### Exemples 12 et 13

L'exemple 10 est répété avec les variantes suivantes :
- le latex de départ est neutralisé à pH = 9 par ajout de chaux,
- le naphtalènesulfonate est le 1-naphtol-4-sulfonate de sodium.

Les conditions et résultats sont rassemblés dans le tableau 1.

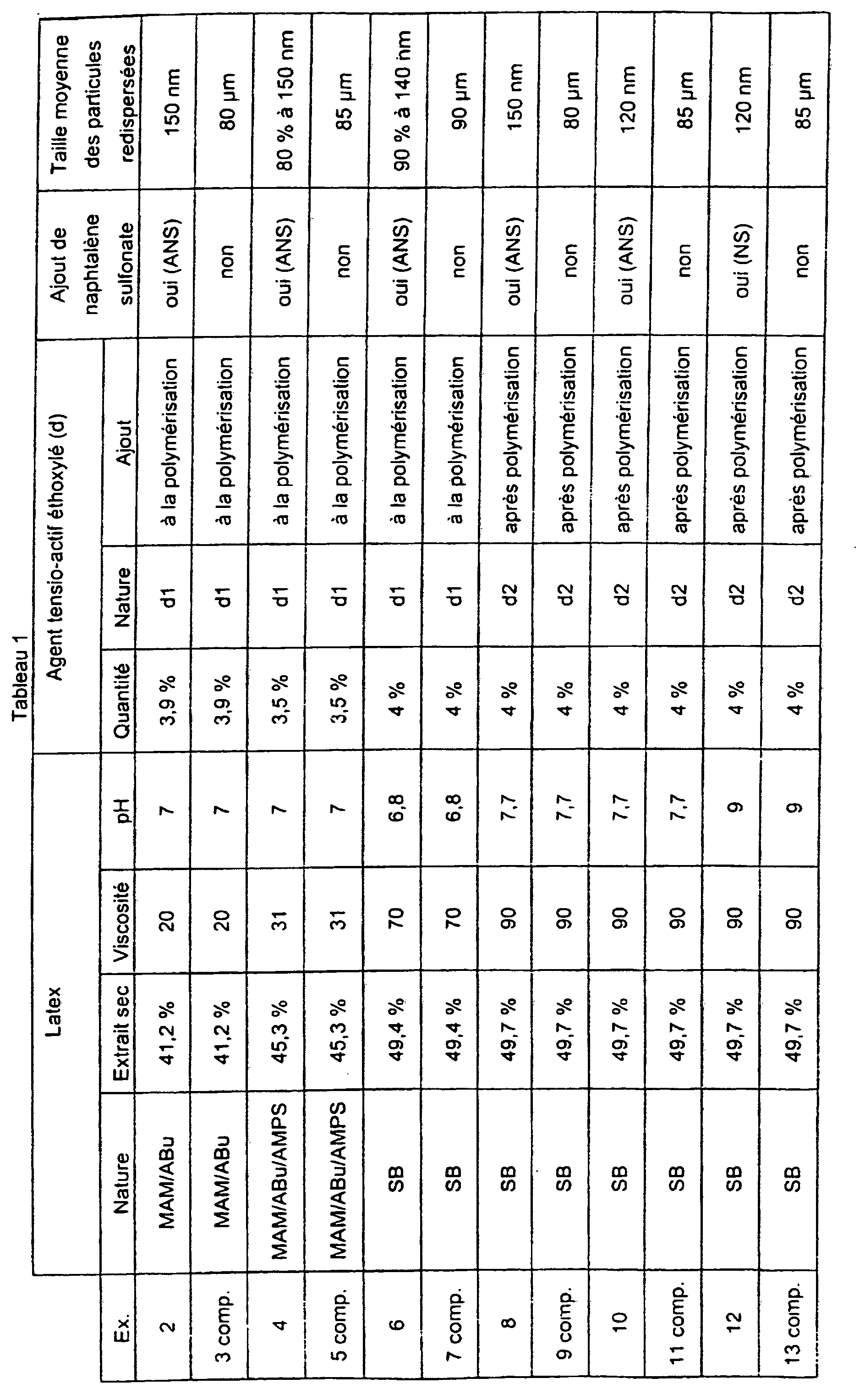

Signification des abréviations du tableau :
. MAM: méthacrylate de méthyle
. B : butadiène
. ABu : acrylate de butyle
. S : styrène
. AMPS : 2-acrylamido-2-méthyl-propane sulfonate de sodium
. d1 : alcool gras éthoxylé avec 25 motifs éthoxylés
. d2 : alcool gras éthoxylé avec 16 motifs éthoxylés
. ANS : 4-amino-1-naphtalène sulfonate de sodium
. NS : 1-naphtol-4-sulfonate de sodium

La viscosité est exprimée en mPa.s.

Le pH correspond au pH du latex de départ après ajustement par ajout de soude.

Les poudres obtenues dans les exemples 2, 8, 10 et 12 présentent les caractéristiques suivantes :
. excellente fluidité,
. bonne stabilité au stockage,
. excellent mouillage par l'eau,
. redispersion spontanée, rapide et totale aussi bien dans l'eau déionisée que dans une solution concentrée de CaCl₂ (1M). On constate que la taille moyenne des particules du latex reconstitué est proche de celle du latex de départ.

Dans le cas des exemples 4 et 6, on constate que toutes les particules ne sont pas tout à fait redispersées. Ceci se traduit, sur la courbe de granulométrie, par la présence de deux pics correspondant à deux populations de granulométries différentes.

Ainsi, on constate que 80 % en volume des particules de l'exemple 4 se redispersent. Sur cette population redispersée, la taille moyenne est de 150 nm : la redispersion est pratiquement totale.

Pour l'exemple 6, 90 % en volume des particules se redispersent. Sur cette population redispersée, la taille moyenne est de 140 nm : la redispersion est également pratiquement totale.

Les poudres obtenues dans les exemples comparatifs 3, 5, 7, 9, 11 et 13 ne sont pas redispersables.

### Propriétés d'usage de la composition de l'exemple 8

On prépare un mortier de composition suivante :
- ciment CPA 55 450 parties en poids
- sable normalisé NF-15-403 1350 parties en poids
- poudre issue de l'exemple 8 22,5 parties en poids
- eau 225 parties en poids
- antimousse Rhoximat 700 DD 1 partie en poids

Les propriétés de ce mortier sont comparées à celles du mortier ne contenant pas de poudre issue de l'exemple 8.

### Mesure de la densité

La densité est mesurée sur le ciment frais, après malaxage, par pesée dans un volume déterminé.

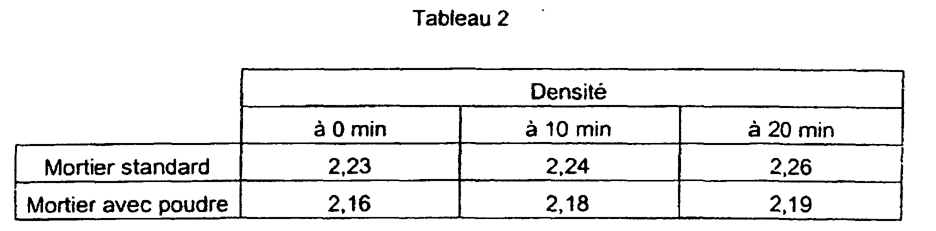

### Mesure de la plasticité

La plasticité est mesurée à l'aide d'une table à secousse sur mortier normalisé (NFP 15403). Le mortier est introduit dans un moule tronconique puis démoulé et secoué à l'aide de la table à secousse. La plasticité est la différence entre le diamètre du mortier après effondrement et celui du moule tronconique. Elle est exprimée en pourcentage.

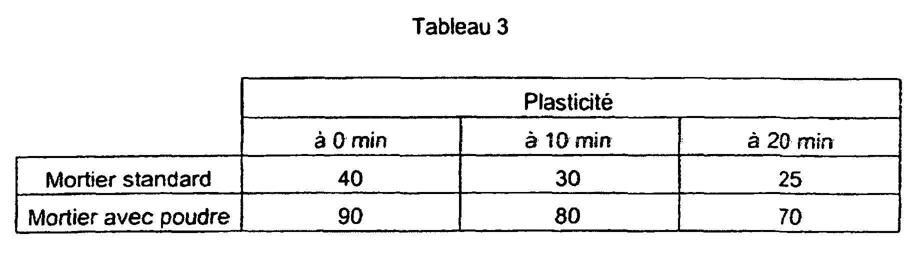

### Mesure du temps de prise

Le temps de prise est mesuré à l'aide d'un appareil Vicat automatique selon la norme NFP 15431.

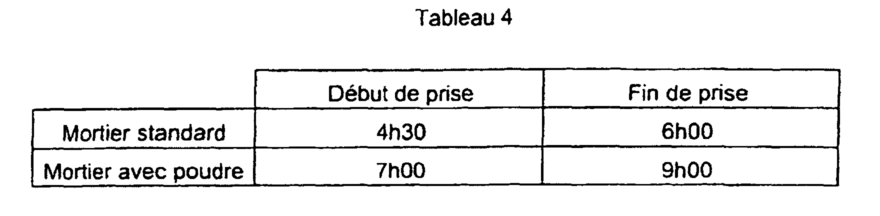

### Mesure des propriétés mécaniques

On réalise des éprouvettes prismatiques (4X4X16 cm³) en coulant le mortier ou le coulis dans des moules standards en acier doux. Ces éprouvettes sont démoulées 1 heure après le temps de prise et séchées à température ambiante. Les propriétés mécaniques sont testées sur ces éprouvettes.

Les essais sont réalisés en flexion en trois points (NFP 18407) sur les éprouvettes et en compression (NFP 15451) sur six demi-éprouvettes à l'aide d'une machine d'essai hydraulique (200 kN).

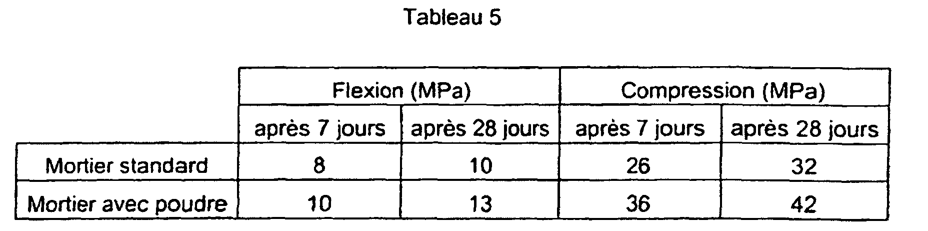

### Mesure de l'adhésion

Un revêtement de 1 cm est réalisé à partir du mortier ou le coulis à tester sur une dalle en béton. Un jour plus tard, on effectue un carottage du revêtement sec, et on colle un plot métallique sur la partie carottée. Le plot est ensuite arraché à l'aide d'un arrachemètre : la force appliquée pour une surface de 20 à 25 cm² détermine la valeur de l'adhésion.

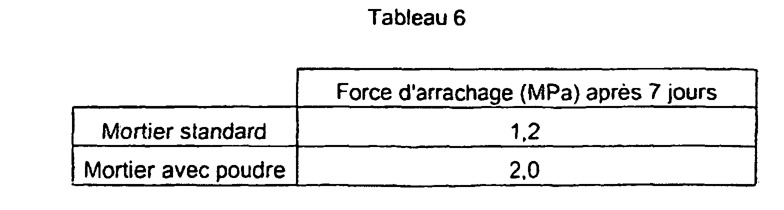

Ces résultats sont équivalents à ceux obtenus avec le latex avant atomisation, ce qui prouve la bonne redispersibilité de la poudre.

## Revendications

1. Composition pulvérulente redispersable dans l'eau et comportant :
- au moins un polymère filmogène insoluble dans l'eau, ledit polymère (a) étant préparé à partir d'au moins un monomère à insaturation éthylénique,
- au moins un naphtalènesulfonate (b) de formule générale (I) : 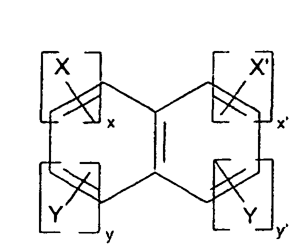
dans laquelle :
. X et X', identiques ou différents, représentent OH ou NH₂,
. Y représente SO₃⁻,M⁺, avec M métal alcalin,
. x ≥ 0, x' ≥ 0 et x + x' ≥ 1.
. y ≥ 0, y' ≥ 0 et y + y' ≥ 1.

2. Composition selon la revendication précédente, **caractérisée en ce que** le monomère à insaturation éthylénique est choisi parmi :
- les esters vinyliques,
- les esters acryliques tels que les acrylates et méthacrylates d'alkyle dont le groupe alkyle contient de 1 à 10 atomes de carbone,
- les monomères vinylaromatiques.

3. Composition selon l'une quelconque des revendications précédentes, **caractérisée en ce que** le polymère filmogène insoluble dans l'eau est choisi parmi :
- les homopolymères vinylique ou acrylate,
- les copolymères d'acétate de vinyle, de styrène/butadiène, de styrène/acrylate et de styrène/butadiène/acrylate.

4. Composition selon l'une quelconque des revendications précédentes, **caractérisée en ce que** le naphtalènesulfonate (b) de formule générale (I) est le 4-amino-1-naphtalène sulfonate de sodium ou le 1-naphtol-4-sulfonate de sodium.

5. Composition selon l'une quelconque des revendications précédentes, caractérisée en que la teneur en poids du naphtalènesulfonate (b) de formule (I) par rapport au polymère (a) est comprise entre 2 et 40 %, de préférence entre 8 et 22 %.

6. Composition selon l'une quelconque des revendications précédentes, **caractérisée en ce qu'**elle comprend un polyphénol (c) de synthèse ou naturel.

7. Composition selon la revendication précédente, **caractérisée en ce que** le polyphénol (c) est issu :
- de la condensation de formaldéhyde et d'un composé de formule générale (II): 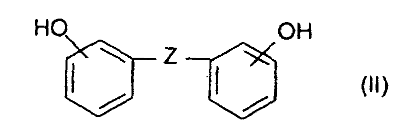 dans laquelle Z représente SO₂,
- et de la sulfométhylation du condensat obtenu.

8. Composition selon la revendication 6, **caractérisée en ce que** le polyphénol (c) est issu de la condensation d'un phénol sulfonaté avec du formaldéhyde et une base organique azotée.

9. Composition selon l'une quelconque des revendications précédentes, **caractérisée en ce qu'**elle comprend un agent tensio-actif polyoxyalkyléné (d).

10. Composition selon la revendication précédente, **caractérisée en ce que** l'agent tensio-actif polyoxyalkyléné (d) est non ionique et choisi parmi les dérivés polyoxyalkylénés suivants :
- les alcools gras éthoxylés ou éthoxy-propoxylés,
- les triglycérides éthoxylés ou éthoxy-propoxylés,
- les acides gras éthoxytés ou éthoxy-propoxylés,
- les esters de sorbitan éthoxytés ou éthoxy-propoxylés,
- les amines grasses éthoxylées ou éthoxy-propoxylées,
- les di(phényl-1 éthyl) phénols éthoxylés ou éthoxy-propoxylés,
- les tri(phényl-1 éthyl) phénols éthoxylés ou éthoxy-propoxylés, et
- les alkyls phénols éthoxylés ou éthoxy-propoxylés
- les tristyryls phénols éthoxylés ou les distyryls phénols éthoxylés.
- les diblocs oxyéthylène (OE)/oxypropytène (OP),
- les triblocs OE/OP/OE.

11. Composition selon la revendication 9, **caractérisée en ce que** l'agent tensio-actif polyoxyalkyléné (d) est ionique et choisi dans la liste des dérivés polyoxyalkylénés de la revendication 10.

12. Composition selon l'une quelconque des revendications 10 ou 11, **caractérisée en ce que** la teneur en poids de l'agent tensio-actif polyoxyalkyléné (d), exprimé en sec, par rapport au polymère (a) est comprise entre 1 et 10 %, de préférence entre 3 et 6 %.

13. Composition selon l'une quelconque des revendications précédentes, **caractérisée en ce qu'**elle comprend au moins une charge minérale (e) en poudre de granulométrie inférieure à 20 µm.

14. Procédé de préparation d'une composition pulvérulente redispersable telle que définie à l'une quelconque des revendications précédentes, **caractérisé en ce qu'**on élimine l'eau d'une dispersion aqueuse constituée du polymère filmogène insoluble dans l'eau (a) préparé par polymérisation en émulsion et contenant des quantités adaptées en naphtalènesulfonate (b), et éventuellement en polyphénol (c), en agent tensio-actif (d) et en charge minérale (e).

15. Procédé selon la revendication 14, **caractérisé en ce qu'**avant de mélanger la dispersion aqueuse avec l'agent tensio-actif (d) et le naphtalènesulfonate (b), on ajuste le pH de la dispersion aqueuse à un pH supérieur à 7.

16. Procédé selon la revendication 14 ou 15, **caractérisé en ce que** le procédé choisi est le procédé par séchage/pulvérisation.

17. Procédé selon l'une quelconque des revendications 14 à 16, **caractérisé en ce que** l'agent tensio-actif polyoxyalkyléné (d) est ajouté au cours de la polymérisation en émulsion du polymère (a).

18. Latex reconstitué obtenu par redispersion dans l'eau d'une composition pulvérulente telle que définie à l'une quelconque des revendications 1 à 13.

19. Utilisation des latex reconstitués définis à la revendication 18 et des compositions pulvérulentes définies aux revendications 1 à 13, comme additifs à des liants hydrauliques, des adhésifs, des compositions de couchage du papier et des peintures.

20. Utilisation des latex reconstitués définis à la revendication 18 et des compositions pulvérulentes définies aux revendications 1 à 13 comme additifs au ciment.

## Patentansprüche

1. In Wasser redispergierbare pulverförmige Zusammensetzung, enthaltend:
- mindestens ein in Wasser unlösliches filmbildendes Polymer (a), wobei das Polymer (a) ausgehend von mindestens einem Monomer mit ethylenisch ungesättigter Bindung hergestellt ist;
- mindestens ein Naphthalinsulfonat (b) der allgemeinen Formel (I): 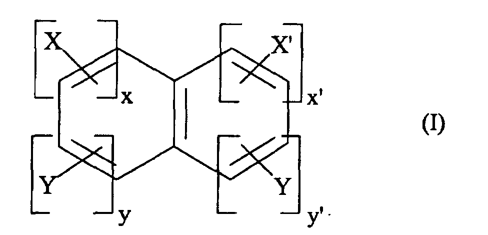
wobei:
• X und X', identisch oder verschieden, OH oder NH₂ darstellen,
• Y SO₃⁻ M⁺ darstellt, wobei M ein Alkalimetall ist,
• x ≥ 0, x' ≥ 0 und x + x' ≥ 1,
• y ≥0, y' ≥ 0 und y + y' ≥ 1.

2. Zusammensetzung nach dem vorangehenden Anspruch, **dadurch gekennzeichnet, daß** das Monomer mit ethylenisch ungesättigter Bindung ausgewählt ist aus
- Vinylestern,
- Acrylestern, wie Alkylacrylaten und -methacrylaten, deren Alkylgruppe 1 bis 10 Kohlenstoffatome enthält,
- vinylaromatischen Monomeren.

3. Zusammensetzung nach einem der vorangehenden Ansprüche, **dadurch gekennzeichnet, daß** das in Wasser unlösliche filmbildende Polymer (a) ausgewählt ist aus
- Vinyl- oder Acrylathomopolymeren,
- Copolymeren von Vinylacetat, von Styrol/Butadien, von Styrol/Acrylat und von Styrol/Butadien/Acrylat.

4. Zusammensetzung nach einem der vorangehenden Ansprüche, **dadurch gekennzeichnet, daß** das Naphthalinsulfonat (b) der allgemeinen Formel (I) Natrium-4-amino-1-naphthalinsulfonat oder Natrium-1-naphthol-4-sulfonat ist.

5. Zusammensetzung nach einem der vorangehenden Ansprüche, **dadurch gekennzeichnet, daß** der gewichtsbezogene Gehalt an Naphthalinsulfonat (b) der Formel (I), bezogen auf das Polymer (a), 2 bis 40 %, vorzugsweise 8 bis 22 %, beträgt.

6. Zusammensetzung nach einem der vorangehenden Ansprüche, **dadurch gekennzeichnet, daß** die Zusammensetzung ein natürliches oder synthetisches Polyphenol (c) enthält.

7. Zusammensetzung nach dem vorangehenden Anspruch, **dadurch gekennzeichnet, daß** das Polyphenol (c)
- aus der Kondensation von Formaldehyd und einer Verbindung der allgemeinen Formel (II) 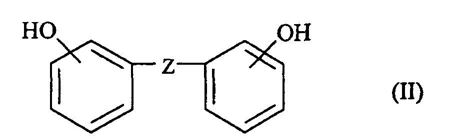 wobei Z SO₂ darstellt,
- und aus der Sulfomethylierung des erhaltenen Kondensates stammt.

8. Zusammensetzung nach Anspruch 6, **dadurch gekennzeichnet, daß** das Polyphenol (c) aus der Kondensation eines sulfonierten Phenols mit Formaldehyd und einer stickstoffhaltigen organischen Base stammt.

9. Zusammensetzung nach einem der vorangehenden Ansprüche, **dadurch gekennzeichnet, daß** die Zusammensetzung ein oberflächenaktives (tensidisches) Polyoxyalkylenreagenz (d) enthält.

10. Zusammensetzung nach dem vorangehenden Anspruch, **dadurch gekennzeichnet, daß** das oberflächenaktive Polyoxyalkylenreagenz (d) nichtionisch ist und ausgewählt ist aus folgenden Polyoxyalkylenderivaten:
- ethoxylierten oder ethoxypropoxylierten Fettalkoholen,
- ethoxylierten oder ethoxypropoxylierten Triglyceriden,
- ethoxylierten oder ethoxypropoxylierten Fettsäuren,
- ethoxylierten oder ethoxypropoxylierten Sorbitanestern,
- ethoxylierten oder ethoxypropoxylierten Fettaminen,
- ethoxylierten oder ethoxypropoxylierten Di(1-phenylethyl)phenolen,
- ethoxylierten oder ethoxypropoxylierten Tri(1-phenylethyl)phenolen,
- ethoxylierten oder ethoxypropoxylierten Alkylphenolen,
- ethoxylierten Tristyrylphenolen oder ethoxylierten Distyrylphenolen,
- Zweiblock-Oxyethylen (OE)/Oxypropylen (OP),
- Dreiblock-OE/OP/OE.

11. Zusammensetzung nach Anspruch 9, **dadurch gekennzeichnet, daß** das oberflächenaktive Polyoxyalkylenreagenz (d) ionisch ist und ausgewählt ist aus der Liste der Polyoxyalkylenderivate des Anspruchs 10.

12. Zusammensetzung nach einem der Ansprüche 10 oder 11, **dadurch gekennzeichnet, daß** der gewichtsbezogene Gehalt an oberflächenaktivem Polyoxyalkylenreagenz (d), berechnet als Trockengewicht und bezogen auf das Polymer (a), 1 bis 10 %, vorzugsweise 3 bis 6 %, beträgt.

13. Zusammensetzung nach einem der vorangehenden Ansprüche, **dadurch gekennzeichnet, daß** die Zusammensetzung mindestens einen mineralischen Füllstoff in Pulverform mit einer Granulometrie (Teilchengröße) kleiner als 20 µm enthält.

14. Verfahren zur Herstellung einer redispergierbaren pulverförmigen Zusammensetzung, wie in einem der vorangehenden Ansprüche definiert, **dadurch gekennzeichnet, daß** man das Wasser einer wäßrigen Dispersion entfernt, die aus einem in Wasser unlöslichen filmbildenden Polymer (a), das durch Emulsionspoylmerisation hergestellt ist, besteht und geeignete bzw. angepaßte Mengen an Naphthalinsulfonat (b) und gegebenenfalls Polyphenol (c), oberflächenaktivem Reagenz (d) und mineralischem Füllstoff (e) enthält.

15. Verfahren nach Anspruch 14, **dadurch gekennzeichnet, daß** vor Mischen der wäßrigen Dispersion mit dem oberflächenaktiven Reagenz (d) und dem Naphthalinsulfonat (b) der pH-Wert der wäßrigen Dispersion auf einen pH-Wert oberhalb von 7 eingestellt wird.

16. Verfahren nach Anspruch 14 oder 15, **dadurch gekennzeichnet, daß** das Verfahren ausgewählt ist aus Trocknung/Pulverisation (Zerstäuben).

17. Verfahren nach einem der Ansprüche 14 bis 16, **dadurch gekennzeichnet, daß** das oberflächenaktive Polyoxyalkylenreagenz (d) während der Emulsionspolymerisation des Polymers (a) hinzugegeben wird.

18. Rekonstituierter (wiederhergestellter) Latex, erhalten durch Redispergierung einer pulverförmigen Zusammensetzung nach einem der Ansprüche 1 bis 13 in Wasser.

19. Verwendung der rekonstituierten Latices nach Anspruch 18 und der pulverförmigen Zusammensetzungen nach den Ansprüchen 1 bis 13 als Additive für hydraulische Bindemittel, Klebstoffe, Zusammensetzungen zur Beschichtung von Papier und Lacke bzw. Farben.

20. Verwendung der rekonstituierten Latices nach Anspruch 18 und der pulverförmigen Zusammensetzung nach den Ansprüchen 1 bis 13 als Additive für Zement.

## Claims

1. Water-redispersible pulverulent composition comprising:
- at least one water-insoluble film-forming polymer, the said polymer (a) being prepared from at least one monomer with ethylenic unsaturation,
- at least one naphthalenesulphonate (b) of general formula (I): 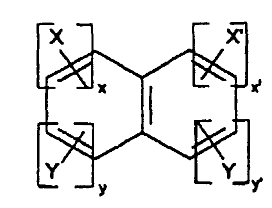
in which:
• X and X', which are identical or different, represent OH or NH₂,
• Y represents SO₃⁻M⁺, with M alkali metal,
• x ≥ 0, x' ≥ 0 and x + x' ≥ 1,
• y ≥ 0, y' ≥ 0 and y + y' ≥ 1.

2. Composition according to the preceding claim, **characterized in that** the monomer with ethylenic unsaturation is chosen from:
- vinyl esters,
- acrylic esters, such as alkyl acrylates and methacrylates, the alkyl group of which comprises from 1 to 10 carbon atoms,
- vinylaromatic monomers.

3. Composition according to any one of the preceding claims, **characterized in that** the water-insoluble film-forming polymer is chosen from:
- vinyl or acrylate homopolymers,
- vinyl acetate, styrene/butadiene, styrene/acrylate and styrene/butadiene/acrylate copolymers.

4. Composition according to any one of the preceding claims, **characterized in that** the naphthalenesulphonate (b) of general formula (I) is sodium 4-amino-1-naphthalenesulphonate or sodium 1-naphthol-4-sulphonate.

5. Composition according to any one of the preceding claims, **characterized in that** the content by weight of the naphthalenesulphonate (b) of formula (I) with respect to the polymer (a) is between 2 and 40%, preferably between 8 and 22%.

6. Composition according to any one of the preceding claims, **characterized in that** it comprises a synthetic or natural polyphenol (c).

7. Composition according to the preceding claim, **characterized in that** the polyphenol (c) results:
- from the condensation of formaldehyde and of a compound of general formula (II): 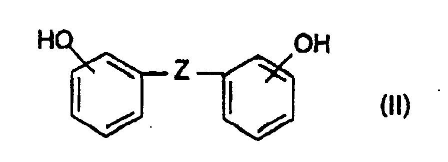 in which Z represents SO₂,
- and from the sulphomethylation of the condensate obtained.

8. Composition according to claim 6, **characterized in that** the polyphenol (c) results from the condensation of sulphonated phenol with formaldehyde and a nitrogenous organic base.

9. Composition according to any one of the preceding claims, **characterized in that** it comprises a polyoxyalkylenated surface-active agent (d).

10. Composition according to the preceding claim, **characterized in that** the polyoxyalkylenated surface-active agent (d) is nonionic and chosen from the following polyoxyalkylenated derivatives:
- ethoxylated or ethoxy-propoxylated fatty alcohols,
- ethoxylated or ethoxy-propoxylated triglycerides,
- ethoxylated or ethoxy-propoxylated fatty acids,
- ethoxylated or ethoxy-propoxylated sorbitan esters,
- ethoxylated or ethoxy-propoxylated fatty amines,
- ethoxylated or ethoxy-propoxylated di(1-phenylethyl)phenols,
- ethoxylated or ethoxy-propoxylated tri(1-phenylethyl)phenols,
- ethoxylated or ethoxy-propoxylated alkylphenols,
- ethoxylated tristyrylphenols. or ethoxylated distyrylphenols,
- oxyethylene (OE)/oxypropylene (OP) diblocks,
- OE/OP/OE triblocks.

11. Composition according to claim 9, **characterized in that** the polyoxyalkylenated surface-active agent (d) is ionic and chosen from the list of the polyoxyalkylenated derivatives of claim 10.

12. Composition according to either one of claims 10 and 11, **characterized in that** the content by weight of the polyoxyalkylenated surface-active agent (d), expressed on a dry basis, with respect to the polymer (a) is between 1 and 10%, preferably between 3 and 6%.

13. Composition according to any one of the preceding claims, **characterized in that** it comprises at least one inorganic filler (e) as a powder with a particle size of less than 20 µm.

14. Process for the preparation of a redispersible pulverulent composition as defined in any one of the preceding claims, **characterized in that** the water is removed from an aqueous dispersion composed of the water-insoluble film-forming polymer (a) prepared by emulsion polymerization and comprising appropriate amounts of naphthalenesulphonate (b) and optionally of polyphenol (c), of surface-active agent (d) and of inorganic filler (e).

15. Process according to claim 14, **characterized in that**, before mixing the aqueous dispersion with the surface-active agent (d) and the naphthalenesulphonate (b), the pH of the aqueous dispersion is adjusted to a pH of greater than 7.

16. Process according to claim 14 or 15, **characterized in that** the process chosen is the spray drying process.

17. Process according to any one of claims 14 to 16, **characterized in that** the polyoxyalkylenated surface-active agent (d) is added during the emulsion polymerization of the polymer (a).

18. Reconstituted latex obtained by redispersion in water of a pulverulent composition as defined in any one of claims 1 to 13.

19. Use of the reconstituted latices defined in claim 18 and of the pulverulent compositions defined in claims 1 to 13 as additives to hydraulic binders, adhesives, compositions for the coating of paper, and paints.

20. Use of the reconstituted latices defined in claim 18 and of the pulverulent compositions defined in claims 1 to 13 as additives to cement.
